# DEMANDE DE BREVET EUROPEEN

(11) **EP 0 740 134 A1**
(43) Date de publication de la demande: **30.10.1996**
(21) Numéro de dépôt: 96106614.9
(22) Date de dépôt: 26.04.1996
(51) Int. Cl.: G01K 1/14

(54) **Dispositif de fixation d'une sonde de température dans une installation de chauffage et/ou de climatisation de véhicule automobile**

(30) Priorité: 28.04.1995 FR 9505167
(71) Demandeur: VALEO CLIMATISATION, 78320 Le Mesnil Saint-Denis (FR)
(72) Inventeur: Cesari, Mario, 75116 Paris (FR); Cloteaux, Pascal, 78000 Versailles (FR); Collgon, Jean-Pierre, 28400 Nogent le Rotrou (FR)
(74) Mandataire: Gamonal, Didier

(57) **Abrégé**

L'invention concerne un dispositif de fixation d'une sonde de température (12) au travers d'une ouverture (14) d'une paroi (16) dans une installation de chauffage et/ou de climatisation de véhicule automobile. Le dispositif (10) comprend un corps tubulaire (28) propre à être immobilisé dans l'ouverture (14) de la paroi (16) et un manchon (30) relié à l'intérieur du corps tubulaire et formant un passage pour les fils de raccordement (24) de la sonde (12) et leur gaine (26), le manchon (30) comportant une extrémité étroite (48) propre à enserrer la gaine (26) et une extrémité élargie (50) tournée vers l'élément thermosensible (22) de la sonde et propre à autoriser un débattement latéral limité des fils de raccordement.

L'invention est applicable notamment pour la fixation d'une sonde de température dans un évaporateur d'une installation de climatisation de véhicule automobile.

## Description

L'invention concerne un dispositif de fixation d'une sonde de température au travers d'une ouverture d'une paroi dans une installation de chauffage et/ou de climatisation de véhicule automobile.

On connaît déjà, en particulier d'après le Brevet français No 86 16494, un dispositif de fixation de ce type, qui est destiné à une sonde comprenant un élément thermosensible et deux fils de raccordement entourés par une gaine.

De tels dispositifs sont utilisés notamment pour la fixation d'une sonde de température, par exemple d'une thermistance, dans un évaporateur faisant partie d'une installation de climatisation de véhicule automobile.

En ce cas, la paroi précitée fait partie d'un boîtier qui entoure l'évaporateur, ce dernier comportant un logement situé en regard de l'ouverture de la paroi et propre à recevoir l'élément thermosensible de la sonde.

Les dispositifs de fixation connus ont pour principal inconvénient d'être intégrés à l'élément thermosensible de la sonde et de comporter des pattes élastiques pour la fixation de la sonde. Il en résulte que, dans le cas où la sonde de température doit être démontée, il peut arriver que les pattes se trouvent détérioriées ou cassées, si bien qu'il est alors nécessaire de remplacer complètement la sonde avec son dispositif de fixation en vue de son remontage ultérieur dans l'installation.

Par ailleurs, un autre inconvénient des dispositifs de fixation connus est qu'ils ne permettent pas de rattraper le défaut d'alignement qui peut exister entre l'ouverture de la paroi et le logement de l'évaporateur qui lui fait face.

L'invention a notamment pour but de surmonter les inconvénients précités.

Elle propose à cet effet un dispositif de fixation du type défini en introduction, lequel comprend un corps tubulaire propre à être immobilisé dans l'ouverture de la paroi et un manchon relié à l'intérieur du corps tubulaire et formant un passage pour les fils de raccordement et leur gaine, ce manchon comportant une extrémité étroite propre à enserrer la gaine et une extrémité élargie tournée vers l'élément thermosensible et propre à autoriser un débattement latéral limité des fils de raccordement.

Il en résulte que le dispositif de fixation peut être facilement monté sur une paroi et enlevé de cette dernière sans risques de détérioration. D'ailleurs, si ce dispositif était détérioré, il pourrait être facilement remplacé car il est réalisé de façon indépendante de la sonde de température proprement dite.

En outre, du fait que le manchon comporte une extrémité élargie, le dispositif autorise un débattement latéral limité des fils de raccordement pour compenser un éventuel défaut d'alignement existant entre l'ouverture de la paroi et le logement, par exemple le logement d'un évaporateur, destiné à recevoir l'élément thermosensible de la sonde.

De façon avantageuse, le manchon a une section transversale généralement ovale.

L'extrémité étroite du manchon est avantageusement munie d'une lèvre périphérique dirigée vers l'intérieur et possédant un contour épousant étroitement la section de la gaine pour immobiliser cette dernière par rapport au manchon.

Il en résulte que la gaine et, par conséquent, les fils de raccordement et l'élément thermosensible, sont immobilisés axialement par rapport à l'ensemble du dispositif.

De façon avantageuse, la lèvre se termine par une arête pointue.

Selon une autre caractéristique de l'invention, l'extrémité élargie du manchon présente une section interne de dimensions supérieures à celles de la section externe de la gaine pour autoriser son débattement.

Cette extrémité élargie du manchon forme avantageusement un appui pour l'élément thermosensible.

Selon une autre caractéristique de l'invention, le corps tubulaire est muni d'une collerette propre à prendre appui contre une face de la paroi et d'au moins un ergot de retenue propre à prendre appui contre une face opposée de la paroi de manière à immobiliser le corps tubulaire par rapport à ladite paroi.

En outre, grâce à cette collerette, le corps tubulaire est relié à étanchéité à la paroi.

Il en résulte que l'élément thermosensible de la sonde ne risque pas d'être perturbé par des influences extérieures.

Avantageusement, le corps tubulaire est muni d'une languette d'extraction située du côté de l'extrémité étroite du manchon. Cette languette d'extraction facilite l'extraction du dispositif, dans le cas où la sonde doit être démontée. Elle est avantageusement située dans le prolongement axial du corps tubulaire.

Selon une autre caractéristique de l'invention, le dispositif est réalisé d'une seule pièce par moulage d'une matière plastique.

Dans la description qui suit, faite à titre d'exemple, on se réfère au dessin annexé, sur lequel :
- la figure 1 est une vue en coupe transversale d'un dispositif selon l'invention utilisé pour la fixation d'une sonde de température au travers d'une ouverture d'une paroi d'un boîtier qui entoure un évaporateur d'une installation de climatisation, la coupe de la figure 1 étant prise suivant la ligne I-I de la figure 2;
- la figure 2 est une vue d'extrémité du dispositif de la figure 1; et
- la figure 3 est une vue en coupe du dispositif selon la ligne III-III de la figure 2.

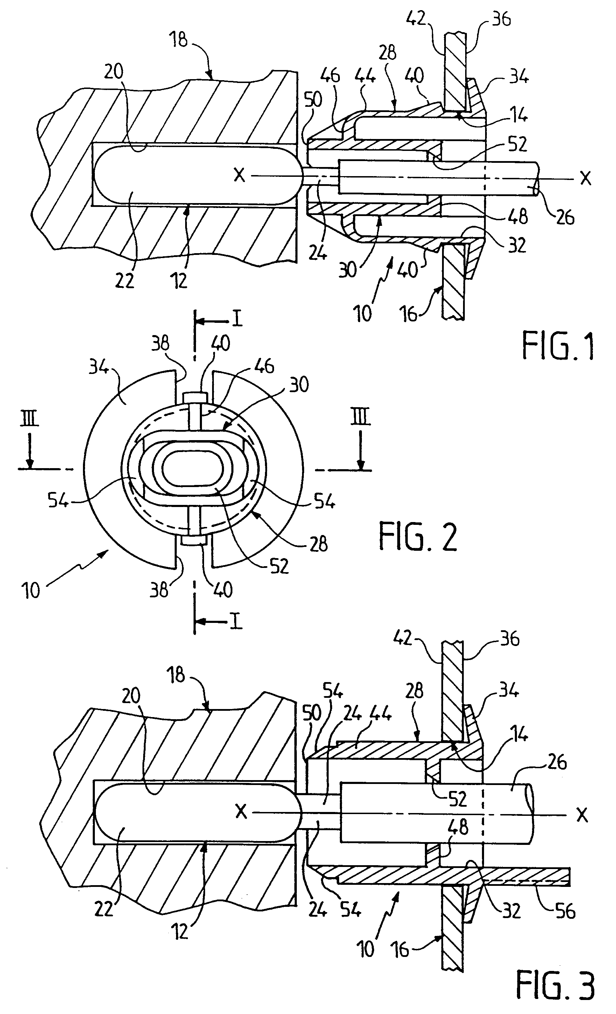

On se réfère tout d'abord à la figure 1 qui montre un dispositif 10 destiné à la fixation d'une sonde de température 12 au travers d'une ouverture circulaire 14 d'une paroi 16. Cette paroi fait partie d'un boîtier d'une installation de chauffage et/ou de climatisation de véhicule automobile et entoure un évaporateur 18.

Ce dernier comporte un logement cylindrique 20 dont l'axe est en principe aligné avec l'axe XX de l'ouverture circulaire 14. Le logement cylindrique 20 est destiné à recevoir un élément thermosensible 22, par exemple une thermistance, qui fait partie de la sonde de température 12. L'élément thermosensible 22 est relié électriquement à deux fils de raccordement 24, lesquels sont entourés par une gaine 26 en matière plastique ayant une section droite de forme sensiblement ovale.

Comme montré aux figures 1 à 3, le dispositif de fixation 10 comprend un corps tubulaire 28 propre à être introduit et immobilisé dans l'ouverture 14 de la paroi 16, ainsi qu'un manchon 30 relié à l'intérieur du corps tubulaire 28 et formant un passage pour les fils de raccordement 24 et leur gaine 26.

Le corps tubulaire 28 a une section circulaire adaptée aux dimensions de l'ouverture circulaire 14 de la paroi 16. Il comprend une première extrémité 32 munie d'une collerette 34 propre à prendre appui contre une face extérieure 36 de la paroi 16. La collerette 34 comporte deux encoches 38 diamétralement opposées.

Le corps tubulaire 28 est muni en outre de deux ergots de retenue 40 situés de façon diamétralement opposée et en regard des deux encoches 38. Les deux ergots 40 sont propres à prendre appui contre une face intérieure 42 de la paroi 16, qui est opposée à la face extérieure 36. Les ergots 40 sont réalisés en pente inclinée par rapport à la direction axiale du corps tubulaire 28. Ainsi, le dispositif 10 peut être introduit au travers de l'ouverture 14, en sorte que les deux ergots 40 se rapprochent l'un de l'autre au moment de la traversée de l'ouverture puis viennent ensuite s'appliquer contre la face 42 de la paroi 16 en fin d'introduction du dispositif. Dans cette position, le dispositif est immobilisé axialement, la collerette 34 prenant appui contre la face extérieure 36 de la paroi 16 et les ergots 40 prenant appui contre la face intérieure 42 de la même paroi 16. Il en résulte également une fixation étanche.

Le corps tubulaire 28 comporte en outre une autre extrémité 44 qui est rattachée par un fond 46 au manchon 30.

Le manchon 30 a une section transversale de forme générale ovale de dimensions supérieures à celles de la section externe de la gaine 26. Le manchon 30 comporte une extrémité étroite 48 propre à enserrer la gaine 26 et une extrémité élargie 50 tournée vers l'élément thermosensible 22 et propre à autoriser un débattement latéral limité des fils de raccordement 24 et de leur gaine 26.

L'extrémité étroite 48 du manchon 30 est munie d'une lèvre périphérique 52 dirigée vers l'intérieur et possédant un contour épousant étroitement la section extérieure de la gaine 26. Dans l'exemple, la lèvre 52 se termine par une arête pointue. Il en résulte que la lèvre périphérique 52 exerce une action de serrage vis-à-vis de la gaine 26 et immobilise cette dernière en position par rapport au dispositif.

L'extrémité élargie 50 du manchon 30 présente une section interne de dimensions supérieures à celles de la section externe de la gaine pour autoriser son débattement. Ainsi, la gaine peut se débattre dans deux directions, ce qui permet de compenser un éventuel défaut d'alignement entre l'axe du logement 20 et l'axe XX de l'ouverture 14.

L'élément thermosensible 22 de la sonde 12 peut être situé à faible distance de l'extrémité 50 du manchon 30 ou bien venir en appui contre cette extrémité 50.

Comme on le voit en particulier sur les figures 2 et 3, l'extrémité 50 comporte deux chanfreins symétriques et opposés 54 formés au niveau des deux parties semi-circulaires de l'extrémité 50. Ces deux chanfreins 54 sont destinés à faciliter l'introduction de l'extrémité 50 du dispositif 10 au travers de l'ouverture 14 de la paroi lors du montage du dispositif.

Comme on le voit sur la figure 3, le corps tubulaire 28 est muni d'une languette d'extraction 56 située dans le prolongement axial du corps tubulaire. Cette languette 56 est située du côté de la collerette 34, c'est-à-dire également du côté de l'extrémité étroite 48 du manchon 30. La fonction de cette languette est essentiellement de faciliter l'extraction du dispositif dans le cas où la sonde doit être démontée. En exerçant une traction sur la languette 56, le dispositif est extrait de la paroi 16, les deux ergots 40 ayant tendance à se rapprocher l'un de l'autre au cours du mouvement d'extraction. En principe, le dispositif 10 n'est pas endommagé et peut être ensuite facilement remis en place.

Toutefois, si par accident, le dispositif devait être détérioré, il pourrait être remplacé facilement, sans qu'il soit nécessaire de changer la sonde elle-même.

Le dispositif 10 est avantageusement réalisé d'une seule pièce par moulage d'une matière plastique.

Le dispositif de l'invention trouve une utilisation dans la fixation d'une sonde de température dans une installation de chauffage et/ou de climatisation de véhicule automobile.

Bien entendu, la sonde de température n'est pas limitée à une utilisation dans un évaporateur, comme décrit précédemment à titre d'exemple.

## Revendications

1. Dispositif de fixation d'une sonde de température au travers d'une ouverture d'une paroi dans une installation de chauffage et/ou de climatisation de véhicule automobile, la sonde de température (12) comprenant un élément thermosensible (22) et deux fils de raccordement (24) entourés par une gaine (26),
caractérisé en ce qu'il comprend un corps tubulaire (28) propre à être immobilisé dans l'ouverture (14) de la paroi (16) et un manchon (30) relié à l'intérieur du corps tubulaire (28) et formant un passage pour les fils de raccordement (24) et leur gaine (26), ce manchon (30) comportant une extrémité étroite (48) propre à enserrer la gaine (26) et une extrémité élargie (50) tournée vers l'élément thermosensible (22) et propre à autoriser un débattement latéral limité des fils de raccordement (24).

2. Dispositif selon la revendication 1, caractérisé en ce que le manchon (30) a une section transversale généralement ovale.

3. Dispositif selon l'une des revendications 1 et 2, caractérisé en ce que l'extrémité étroite (40) du manchon (30) est munie d'une lèvre périphérique (52) dirigée vers l'intérieur et possédant un contour épousant étroitement la section de la gaine (26) pour immobiliser cette dernière par rapport au manchon.

4. Dispositif selon la revendication 3, caractérisé en ce que la lèvre (52) se termine par une arête pointue.

5. Dispositif selon l'une des revendications 1 à 4, caractérisé en ce que l'extrémité élargie (50) du manchon (30) présente une section interne de dimensions supérieures à celles de la section externe de la gaine (26) pour autoriser son débattement.

6. Dispositif selon l'une des revendications 1 à 5, caractérisé en ce que l'extrémité élargie (50) du manchon (30) forme un appui pour l'élément thermosensible (22).

7. Dispositif selon l'une des revendications 1 à 6, caractérisé en ce que le corps tubulaire (28) est muni d'une collerette (34) propre à prendre appui contre une face (36) de la paroi (16) et d'au moins un ergot de retenue (40) propre à prendre appui contre une face opposée (42) de la paroi (16) de manière à immobiliser le corps tubulaire (28) par rapport à la paroi (16).

8. Dispositif selon l'une des revendications 1 à 7, caractérisé en ce que le corps tubulaire (28) est muni d'une languette d'extraction (56) située du côté de l'extrémité étroite (48) du manchon (30).

9. Dispositif selon la revendication 8, caractérisé en ce que la languette d'extraction (56) est dans le prolongement axial du corps tubulaire (28).

10. Dispositif selon l'une des revendications 1 à 9, caractérisé en ce qu'il est réalisé d'une seule pièce par moulage d'une matière plastique.
